# EUROPEAN PATENT APPLICATION

(11) **EP 1 341 005 A2**
(43) Date of publication of application: **03.09.2003**
(21) Application number: 03251211.3
(22) Date of filing: 27.02.2003
(51) Int. Cl.: G01V 3/15

(54) **Multifunctional object sensor**

(30) Priority: 27.02.2002 US 359937 P; 24.02.2003 US 373151
(71) Applicant: TechTronic Industries Co., Ltd., Tsuen Wan, New Territories, Hong Kong (CN)
(72) Inventor: Brazell, Kenneth M., Piedmont, SC 29673 (US); Long, Charles Keith, Seneca, SC 29672 (US); Dils, Jeffrey M., Simpsonville, SC 29681 (US); Nemazi, John E., Bloomfield Hills, Michigan 48302 (US); Sanoner, Hughes, Discovery Bay (HK); Nang, Desmond Tse Wai, 328 Castle Peak Road, Tsuen Wan (HK); Wacker, Charles M., Belton, SC 29627 (US); Yan, Roland Yim Tak, Lei Muk Shue Estate, Tsuen Wan (HK)
(74) Representative: Bucks, Teresa Anne

(57) **Abstract**

An object sensor for sensing objects hidden from view behind a first wall surface. The object sensor (10) has a housing having a front surface (17) with a display (24) and a rear surface (21). The object sensor also has a sensing system (12) and provides additional functions. The additional functions can include a distance detector, a computing system working in conjunction with the distance detector to determine the distance between the object sensor and a second wall, a tracking mechanism, and a projector to project a beam at predetermined distances. The object sensor may further have a level or a location marker.

## Description

This application claims priority to U.S. Application Serial No. 60/359,937 filed February 27, 2002 titled Object Sensor, the entire contents of which is incorporated herein by reference.

The present invention relates to sensors useful during building and construction as well as related activities. In one aspect, the present invention includes object sensors used to detect objects hidden behind a surface and, in particular, to object sensors that incorporate functions other than simply detecting hidden objects. In another aspect, the present invention includes distance sensors that may be provided in a single tool or in combination with other tools or devices, including object sensors.

### BACKGROUND OF THE INVENTION

Often, a tradesman must hang or attach something of substantial weight to the wall and therefore, needs a secure attachment for the screw or other securing device. Attaching the securing device to the stud hidden behind the wall surface is generally the strongest attachment method. Therefore, it is desirable to accurately determine the location of framing studs that are frequently used for support structure and walls during the construction of a building.

Object sensors have been developed to help locate and distinguish between different materials hidden behind walls. For example, object sensors may also detect objects as live electrical wires, conduit, exhaust vents, rebar, plumbing, and other hidden material. Generally, known object sensors detect hidden objects in a variety of ways depending on the object to be detected. For example, the object sensor may use an electromagnetic detector to sense a nail located in the stud, may measure a capacitance change in one or more sensor elements within the sensor, may measure changes in the density of the wall, or may use a combination of these and other methods.

Although currently available object sensors are adequate to locate objects hidden behind a surface, when a tradesman needs to find a stud or other hidden object at a predetermined distance from a second surface or a start point, or locate and mark/drill the center of the object, he must either estimate or grab another tool for measurement. Accordingly, there is a need for a sensor that can detect hidden objects as well as to provide other functions such as determining relative distances, calculating distances, displaying distances, providing a marking mechanism, and displaying information relating to the type of hidden material.

In addition, during such construction activities, it is often necessary to determine the distance from one object to another object and also to make sure that workpieces are positioned and maintained in a desired horizontal and/or vertical position. Therefore, it is often necessary to measure the distance from one object to another object and/or to determine whether a workpiece is level.

### SUMMARY OF THE INVENTION

In one aspect of the present invention, an object sensor is provided that includes functions other than simply detecting hidden objects. In particular, the object sensor includes a housing having a front surface and a rear surface joined by a peripheral surface to define a closed housing. A sensing system is contained within the housing to sense at least one object located behind a first surface and one or more additional functions. The additional functions can include a distance detector, a computing system working in conjunction with the distance detector to determine the distance between the object sensor and a second wall, a tracking mechanism, a projector to project a beam at predetermined distances, an alternative object detection function, and a sensitivity mode adjuster. The distance detector can detect the distance between the object sensor and a second surface. The object sensor may further have a level or a location marker, such as an aperture, a slot, a groove or the like.

Desirably, the object sensor has an indicator that can provide an audible, visual, or sensory indication, or a combination of two or more. Where the indicator is visual, it may include a display on, for example, the front surface and formed with an LED or an array of the same or different colored LEDs. Alternatively, it may include a digital or analog display. The indicator can be both manually activated or automatically activated upon receipt of an appropriate signal from the sensing system, the distance detector, another functional system, or a combination of two or more signals.

In one aspect of the present invention, a distance detector is provided. The distance detector can be provided as a separate device or as a function of the object sensor. In one embodiment, the distance detector includes a beam transmitter to send a beam to a second surface, a receiver to receive the reflected beam, and a computing system to determine the distance from the object sensor to the second surface. Alternatively, the distance detector may include a tracking mechanism and a computing system to determine the distance the object sensor is moved from a set start point. In yet another embodiment, the distance detector may be provided by a measuring tape included within the housing.

Where the distance detector is provided as a separate device, the device may include display functions, computational functions, and memory functions.

Another function that may be included in embodiments of the object sensor of the present invention is a projector to project a beam (desirably light) at predetermined distances on a wall surface. In this embodiment, the projected beam may include a scale or other indication of distance from either the object sensor or the detected hidden object.

Yet another function that could be incorporated into the object sensor of the present invention is a location marker in the form of an aperture, a slot, a groove or the like to allow marking or drilling of a wall surface when the object sensor is in a desired position.

Oftentimes, it is desirable to releasably attach the object sensor to a work belt, tool, or other structure. Therefore, the object sensor of the present invention may also include a clip or other attachment device to releasably attach the object sensor to a portable tool, a belt, or other structure.

It will be understood by those of skill in the art that the present invention provides several devices that have several advantages not presently achieved by known commercial devices.

### DESCRIPTION OF THE DRAWINGS

FIG. 1 is a perspective view of one embodiment of the object sensor of the present invention on a wall surface over a hidden stud.

FIG. 2 is a perspective view of a different design of the object sensor of the present invention.

FIGs. 3a-3h are different arrangements of sensing circuits that may be used in the object sensor of the present invention.

FIGs. 4a and 4b show an indicator that provides a visual indication of objects.

FIGs. 5a-5c show a location marker provided with one embodiment of the object sensor of the present invention.

FIGs. 6a-6b show a different embodiment of an object sensor with a location marker.

FIGs. 7a-7c are different arrangements of a location marker provided with another embodiment of the object sensor of the present invention.

FIGs. 8a-8c are views an object sensor that includes a distance detector. FIG. 8a shows a distance detector that includes an optical sensor. FIGs. 8b and 8c show a distance detector that includes a rotating tracking mechanism.

FIG. 9 is perspective view of another embodiment of the object sensor that includes a distance detector in the form of a retractable measuring tape.

FIGs. 10a-10b are perspective views of another embodiment of the object sensor of the present invention where the object sensor is provided with a projector to project a beam of light on the surface.

FIG. 11a is a perspective view of another embodiment of the object sensor of the present invention where the object sensor is provided with an attachment device to releasably attach the object sensor to a portion of a portable tool.

FIG. 11b is a side view of the embodiment of the object sensor shown in FIG. 11a.

FIG. 11c is a front plan view of the embodiment of the object sensor shown in FIG. 11a.

FIGs. 12a, 12b, 12c and 12d show another embodiment of the object sensor of the present invention where the object sensor is partially removable from a cover and where the cover is provided with an attachment device to releasably attach to at least a portion of a tool.

FIG. 13a shows another embodiment of the object sensor of the present invention where the object sensor is provided with an attachment device or clip to releasably attach the object sensor to a portion of a pocket, a belt, or other structure.

FIG. 13b shows a side view of the object sensor of FIG. 13a.

FIG. 14a shows another embodiment of the object sensor that includes a distance detector in the form of a measuring tape.

FIG. 14b shows a side view of the object sensor of FIG. 14a.

FIG. 15a shows another embodiment of the object sensor that includes a distance detector in the form of a sonic distance detector and that includes a visual indicator.

FIG. 15b shows a side view of the object sensor of FIG. 15a.

FIG. 16a shows another embodiment of an object sensor that is provided with a plurality of mode buttons to change the sensing mode of the object sensor and is provided with a visual indicator.

FIG. 16b shows a side view of the object sensor of FIG. 16a.

FIG. 17 is a schematic of a circuit for the stud locating circuit that is useful in the embodiments of the present invention.

FIG. 18 is a schematic of a circuit for a metal and live wire locating circuit that is useful in the embodiments of the present invention.

FIG. 19 is a schematic arrangement of an antenna for the object sensor.

FIG. 20 is a flow chart showing the operation of one embodiment of the object sensor of the present invention.

FIG. 21 is a flow chart showing the operation of another embodiment of the object sensor of the present invention.

FIG. 22 is a flow chart showing the operation of another embodiment of the object sensor of the present invention.

FIG. 23 is a flow chart showing the operation of another embodiment of the object sensor of the present invention.

FIG. 24 is a flow chart showing a portion of the operation of another embodiment of the object sensor of the present invention. The flow chart may be useful, for example, with the object sensor of FIG. 2 and in particular, with respect to mathematical functions relating to a distance measurement aspect.

FIG. 25 shows one embodiment of a distance sensor according to one aspect of the present invention.

FIG. 26 is a flow chart showing the operation of one embodiment of the distance sensor of FIG. 25 of the present invention.

FIG. 27 is a flow chart showing the operation of another embodiment of the distance sensor of FIG. 25 of the present invention.

FIG. 28 is a flow chart showing the operation of another embodiment of the distance sensor of FIG. 25 of the present invention.

### DESCRIPTION OF THE INVENTION

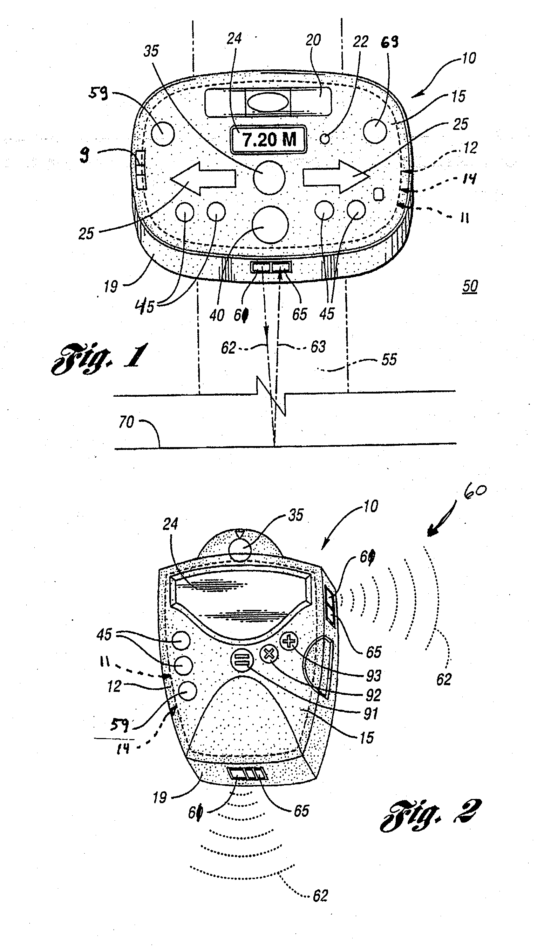

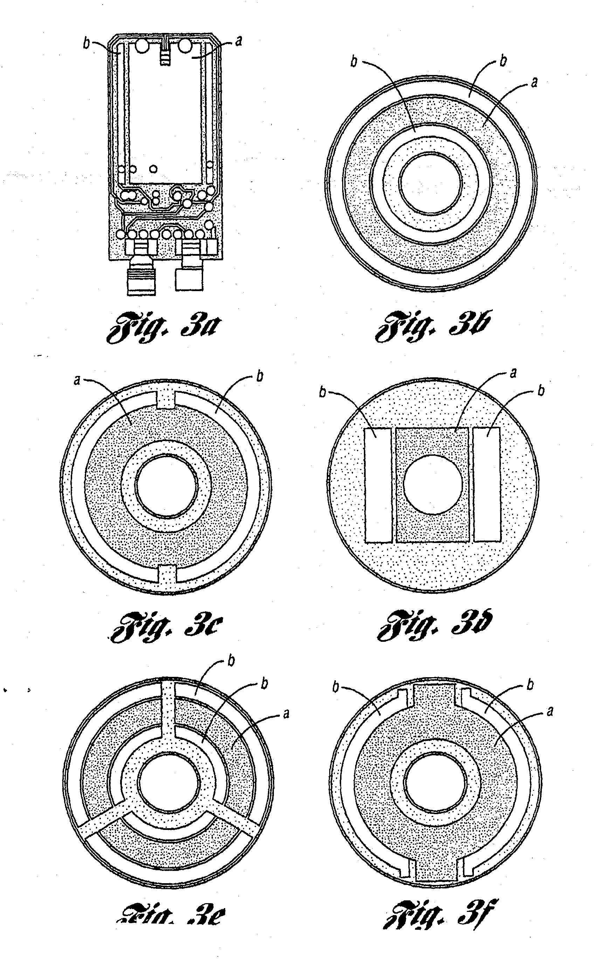

Referring now to FIG. 1, an object sensor 10 according to one embodiment of the present invention is shown. The object sensor comprises a housing 15, a sensing system 12, a microcontroller 11, and a distance detector 60. The housing further comprises a front surface 17 and a peripheral surface 19 that joins a back surface 21 with the front surface 17. The housing 15 may be provided with a clip 16 that is resilient so that the housing 15 can be removably attached to a pocket, tool belt, or other structure to hold the object sensor 10.

The housing 15 may be manufactured out of a hard, impact resistant injectable moldable plastic such as ABS or polystyrene. The housing 15 may also be textured to provide a more secure grip. Suitable materials include the known "soft-touch" elastomeric materials commercially available as SANTOPRENE, KRATON, MONOPRENE. The elastomeric material may be provided with dimpling or other roughening to improve the grip.

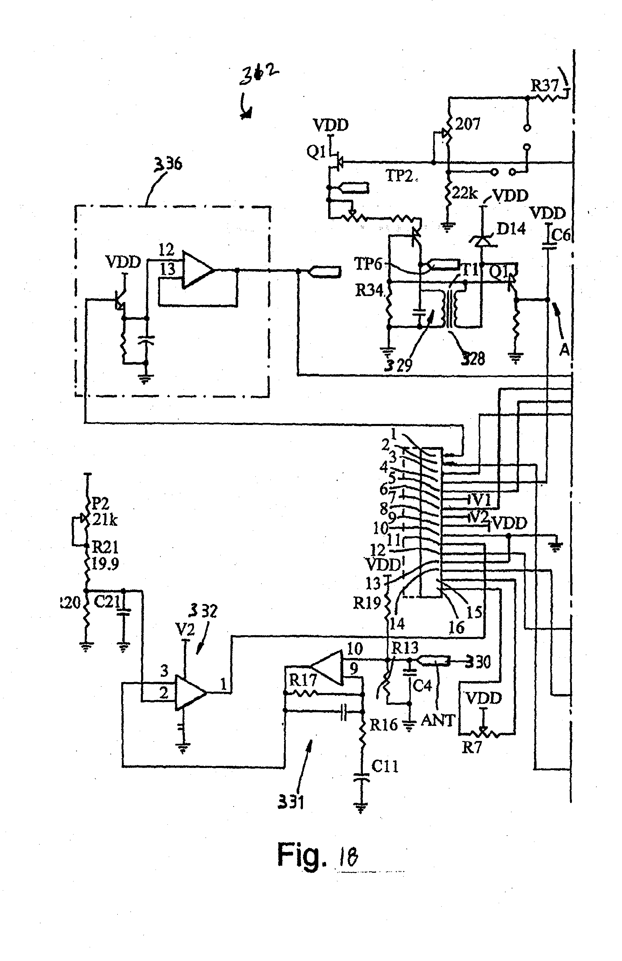

A power switch 9 is provided to power the sensor 10. An AC switch or receptacle (not shown) may be provided to accept an AC power cord for power cord use. Alternatively, the sensor 10 may be powered by direct current in the form of batteries that may be rechargeable. Desirably, when batteries are used to power the object sensor 10, the microcontroller 11 can monitor the battery strength and provide a visual indication at display 24, as shown for example at FIGs. 15a and 16a.

The object sensor 10 may be provided with a timer such that the sensor 10 will turn off after a predetermined period of time. The predetermined period of time may be preset or may be configured to be set by the user.

A level 20 may be included on the housing 10 to indicate the inclination of the object sensor 10 relative to the ground. In other words, the level may provide an indication of the relative horizontal and/or vertical inclination. The level may be a bubble level such as those that are well known in the art. Desirably, the level 20 can be viewed from the front surface 17 and/or a part of the peripheral surface 19.

The sensing system 12 is disposed within the housing 15 and is controlled by a microcontroller 11. The microcontroller 11 will receive one or more signal inputs and provide one or more signal outputs. The signal outputs can be one or more of a visual, tactile, or audible indication. For example, the visual output can be provided by an LED indication such as colored lights or text or numerical indications. The tactile indication can be provided by vibration or the like and the audible indication can be provided by beeps, whines, or other suitable auditory tones.

The microcontroller 11 can be a known and commercially available type, or one that can be created by one skilled in the art. The microcontroller 11 is programmed to control the operation of the object sensor 10 as well as to control and perform other functions required by the object sensor 10. For example, the microcontroller 11 can include or be associated with a computing system 14 that can be used to determine distances from the object sensor 10 or that can be used to compute certain values, as will be explained in more detail below.

The sensing system 12 includes at least one sensor. As will be described in detail below, the sensing system 12 is used to detect objects hidden from view behind, for example, a wall or floor surface. For example, the sensing system 12 can be used to sense studs 55. Although the object sensor 10 is shown with a single sensing circuit 12 and indicator lights 45, the object sensor could contain other features discussed in this disclosure.

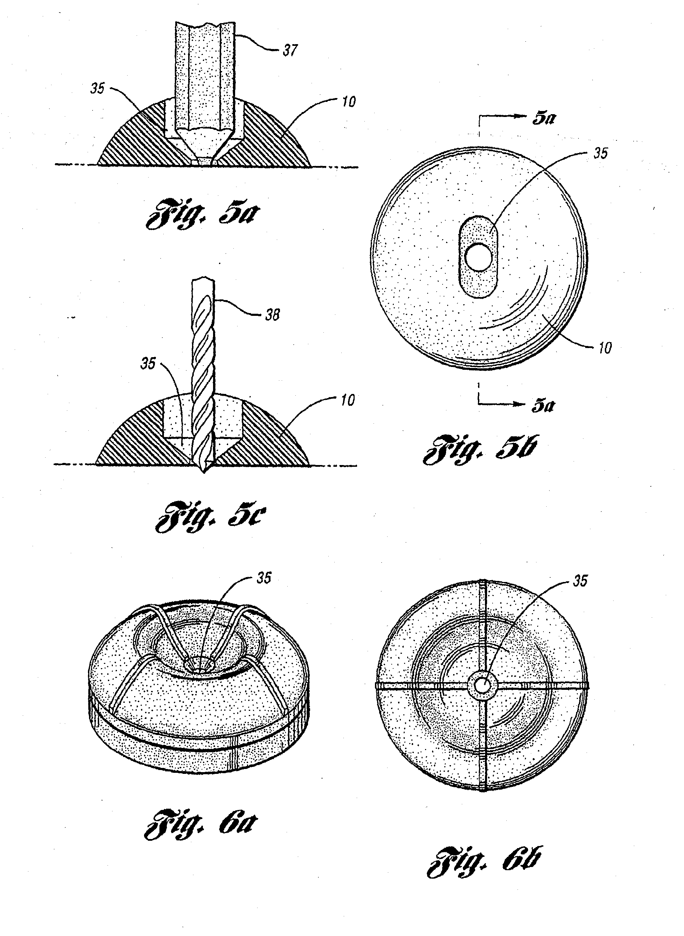

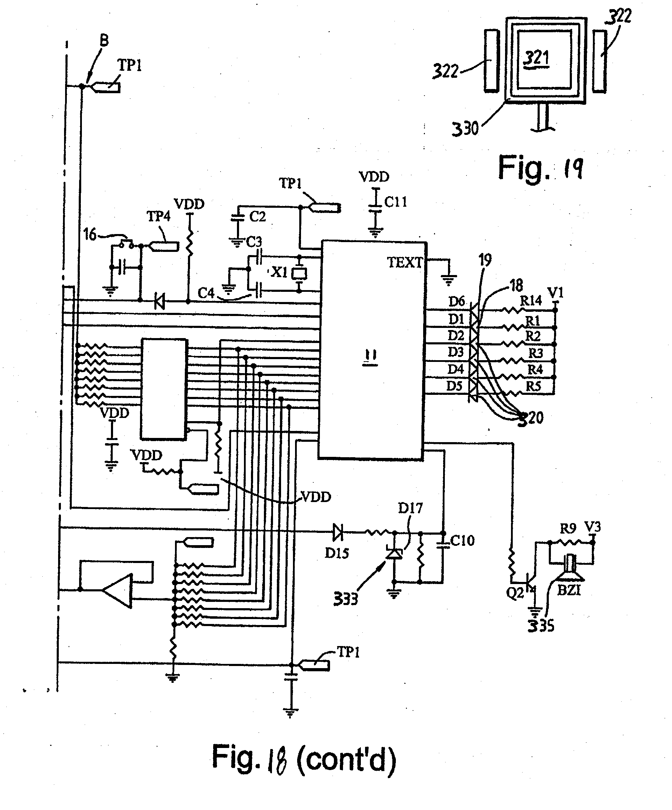

In one embodiment, the sensing system 12 comprises at least two object sensing circuits. The first circuit, a stud sensing circuit 310, as shown in FIG. 17, is used to identify the location of a stud (e.g., the center of a stud) 55. The other circuit 312 can detect a metal object or an electrical wire. Various configurations of multiple object sensing circuits are shown in Figures 3a-3h. Sensing circuits *a* and *b* can be used to distinguish, for example, between different materials, used to locate the center of a beam, or determine the depth of the object.

In general and referring to FIG. 17, a suitable stud sensing circuit 310 for use in the object sensor 10 of the present invention is shown. The circuit 310 includes a first capacitor plate 321 and a pair of second capacitor plates 322 on opposite sides of the capacitor plate 321. The capacitor plates 321, 322 may be mounted in substantially the same plane adjacent an underside surface of the housing 21. The capacitor plates 321, 322 are connected to a pair of monostable circuits 323 that receive trigger pulses at 30 KHz from a microcontroller 11. In operation, the output of the monostable circuits 323 varies with changes in the effective dielectric constant of the wall being scanned. The output of each monostable is compared by a logic gate 325. In the event of an increase in the dielectric constant caused by the proximity of a wooden object to the capacitor plates 321 and 322, pulses generated at the logic gate 325 will increase in intensity. The logic gate 325 supplies signals to the microcontroller 11 as explained below. A power supply and regulator circuit 326 are supplied by a battery, for example, a 9 volt battery and controlled by the microcontroller 11 via a multi-connector 327.

In FIG. 18, a suitable metal object and live wire sensor 312 is shown. The metal detector includes a ferrite core 328 that may be positioned adjacent a peripheral surface 19, for example adjacent aperture 35. A magnetic field is provided in use by the core 328 supplied by a current from the regulated supply. A direct current voltage is developed at A representative of the amplitude of oscillations of the oscillator 329. If a metal object is present in the region of the ferrite core 328, the voltage at A will decrease. Thus, a decrease in the voltage at A serves to locate the proximity of a metal object. This voltage change is monitored by the microcontroller 11.

The live wire detection circuit includes an antenna 330 (FIG. 19), which for convenience is mounted adjacent the capacitor plates 321 and 322 and connected to a bandpass filter 331. The bandpass filter is set to a bandpass range in the region of 50 to 60 Hz. In the event that a live wire comes into proximity with the antenna 330, a modulating signal is generated and compared with a reference by a comparator circuit 332. An output of the comparator circuit 332 is fed via a smoothing circuit 333 to the microcontroller 324.

FIG. 18 also shows an integrating circuit 336 that receives output pulses from the logic gate 325 (FIG. 17) and converts the pulses into a direct current voltage for supplying to the microcontroller 11. The described circuit includes a calibration circuit including a discriminator chip 334. In practice, calibration is carried out as an initial step when the device is first switched ON. The metal detection calibration is carried out first under the control of the microcontroller 11 by automatically setting a suitable voltage at B. The wood detection calibration is likewise carried out automatically in turn by setting a voltage at C (FIG. 17).

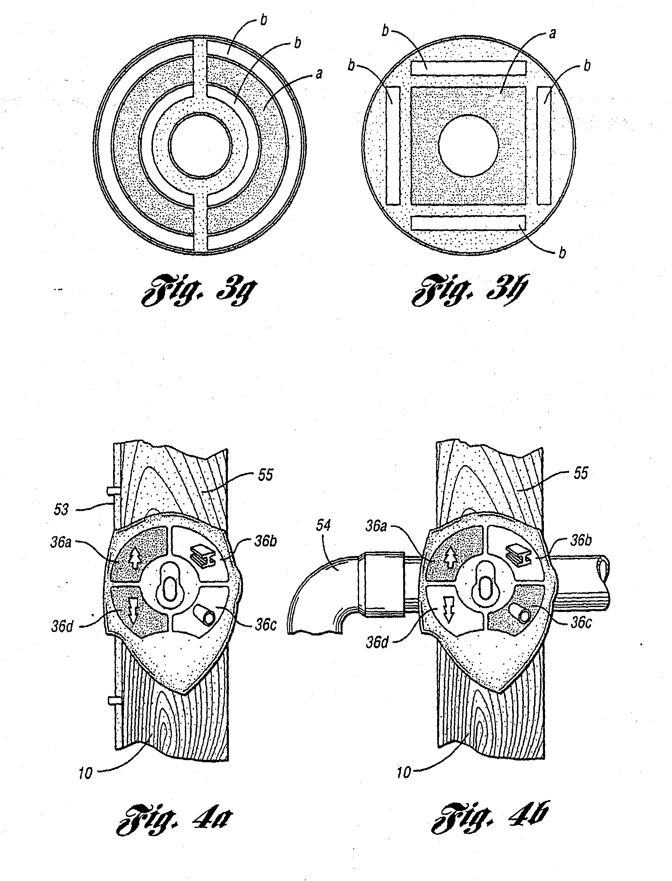

Referring again to Figures 1 and 2, indicator arrows 25 or indicator lights 45 on front surface 17 illuminate to advise the tradesman of which direction to move object sensor 10 such that it is positioned directly over the stud 55 or other hidden object or to advise the tradesman the strength of the signal or to advise the tradesman of the presence of an object. Different audible sounds can be made through speaker 40 on housing 15 or by multiple lights to indicate, for example, an edge of a stud, the center of a stud, a live wire, a ferrous conduit, or other materials or conditions.

For example, as shown in FIG. 14a, multiple indicator lights 45 are provided on the front surface 17 of the housing 15. In this arrangement, one of the indicator lights 45 may be illuminated when the power is turned on, while the other indicator lights 45 may sequentially be illuminated the closer the object sensor 10 is moved toward the center of the stud 55.

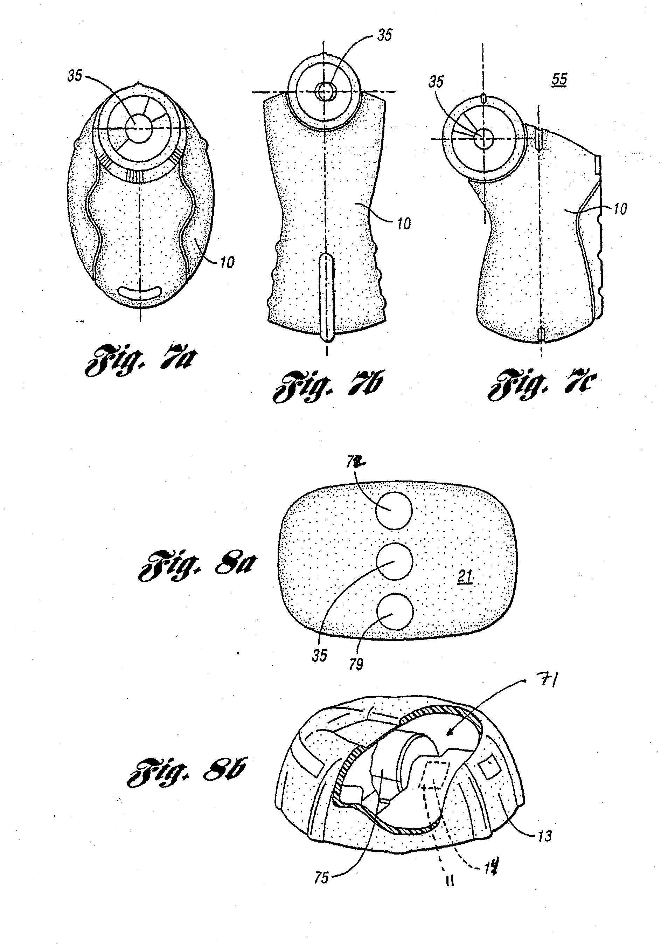

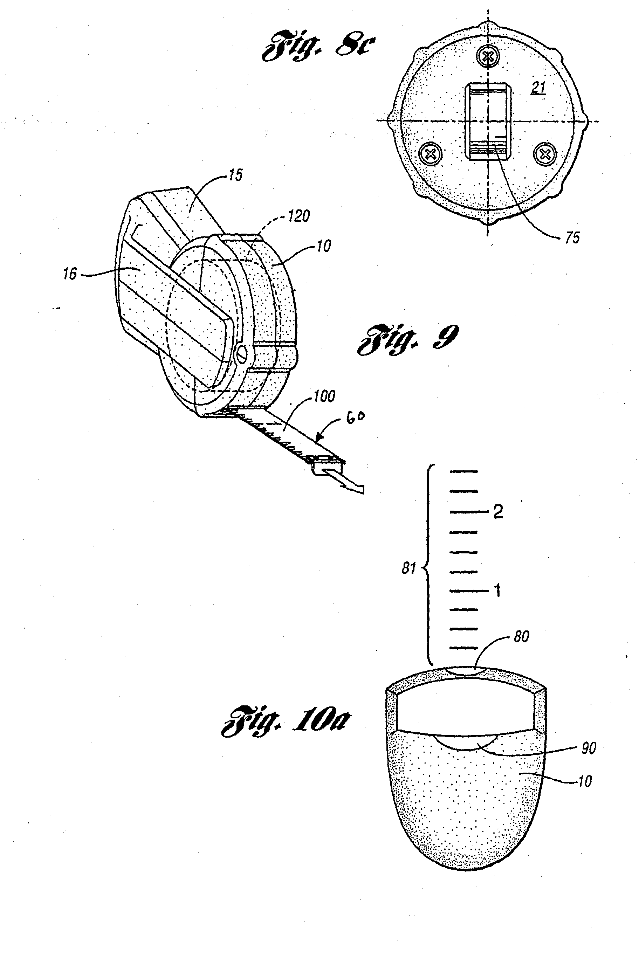

As another example, as shown in Figures 4a and 4b, multiple lights or illuminating tinted lenses 36a, 36b, 36c, and 36d can separately illuminate to indicate the type of material underneath the wall surface. In FIG. 4a, tinted lenses 36a and 36d simultaneously illuminate to indicate the object sensor 10 is over a stud 55 and live electrical wire 53, respectively. In FIG. 4b, tinted lenses 36a and 36c simultaneously illuminate to indicate the object sensor 10 is over a stud 55 and a plastic pipe 54. Tinted lens 36b can be used to indicate that the object sensor 10 is over a metal support pillar (not shown). The indicia and the materials indicated by the illuminated tinted lenses 36 can vary for different object sensors 10.

Alternatively, as best seen in FIGs. 14a, 15a, and 16a, the object sensor may be provided with a mode button 194 to change the mode of the sensing system 12 to change the sensitivity of the sensor or to change the operation of the sensor so that various different objects can be detected. While a single such mode button is identified, it will be appreciated that the object sensor may be provided with more than a single mode button 194.

As noted, the mode button 194 may change the sensitivity of the sensor. Such a change may be useful where in one mode the sensor can reliably detect a stud 55 hidden behind a wall surface 50 having a thickness of about 5/8 inch (the typical thickness of drywall) and in another mode the sensor can reliably detect a stud 55 hidden behind a wall surface 50 having a thickness greater than about 5/8 inch, for example about 1 inch.

Alternatively, as best seen in FIGs. 15 and 16, the mode button 194 may change the mode of operation of the sensor so that in one mode the object sensor is used to detect a stud, in another mode the object sensor can detect a live electrical wire, or in another mode the object sensor can detect a plastic pipe, or in another mode the object sensor can detect a metal support, or in another mode the object sensor can detect one of more of the above. The object sensor shown in FIG. 15a provides a single mode button 194 that can be depressed to change the mode and FIG. 16a shows the mode button 194 as a slideable button. It will be understood that more than a single mode button 194 can be provided.

It is contemplated that the power switch 9 may be electrically combined with the activation button 59 or with the mode button 194. Similarly, the activation button 59 may be combined with the mode button 194. For example, as shown in FIG. 14a, the activation button 59 may be combined with the mode button 194 such that when both the activation button 59 and the mode button 194 are simultaneously depressed, the sensing system 12 will be in a deep read mode. In other words, the sensing system 12 will be able to detect a stud hidden behind a surface up to about 1.5 inch thick.

In another embodiment, as best seen in FIGs. 15a and 15b, when the sensing system 12 detects a stud or other object, indication of the detected object may be visually displayed on display 24. For example, when the sensing system 12 detects a stud 55, the display 24 may provide a visual indication such as the word "stud". Concurrently or alternatively, an audible indication may be provided through speaker 40.

Once the tradesman locates the center of the stud 55, he may desire to mark or drill that location. A location marker 35 can be provided on the housing 15 of object sensor 10. The location marker is desirably located such that when the object sensor 10 indicates that it is over the center of a stud, the location marker 35 is also positioned over the center of the stud 55. The use of level 20 ensures that the object sensor 10 is level.

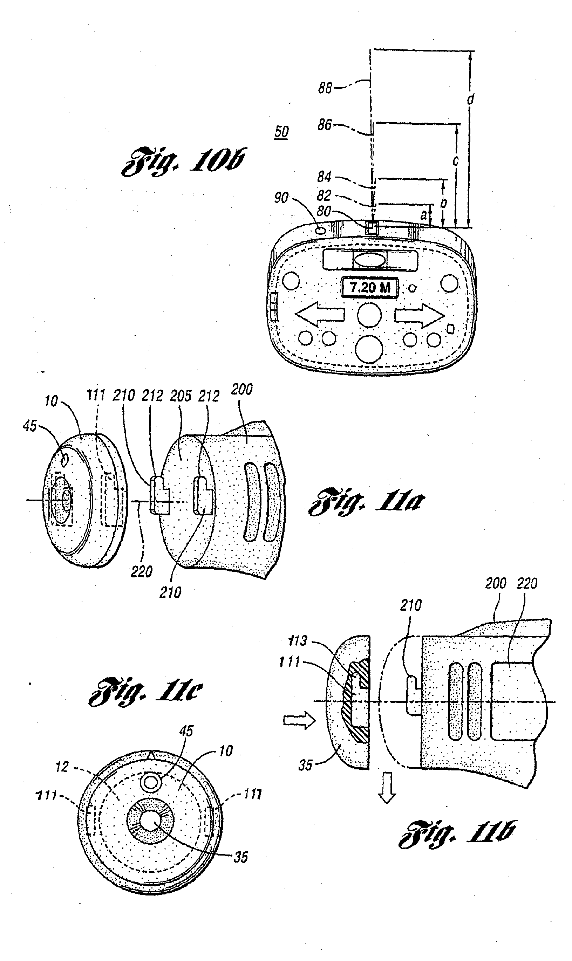

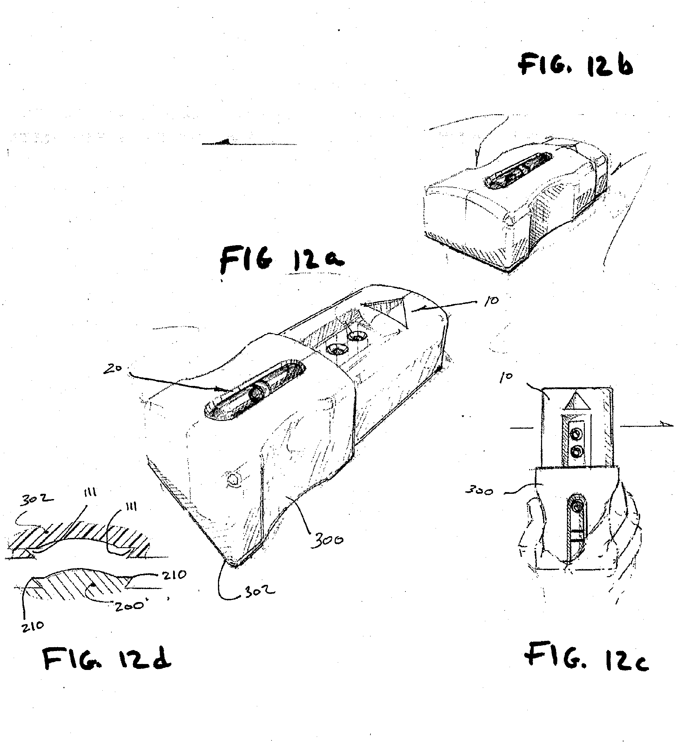

As shown in FIGs. 1, 2, 5a, 5b, and 5c, the location marker 35 in object sensor 10 is in the form of an aperture that extends through the housing 15. The aperture may have any suitable size but is desirably sized to fit a common writing instrument 37 such as a pencil to allow the user to mark the wall surface 50 directly over the center of the stud 55. Additionally, the location marker 35 can be sized to receive a common drill bit 38 or screw to allow the user to drill or screw directly into the center of the stud 55. The location marker 35 may be a funnel-shaped guide hole as shown in Figures 6a and 6b.

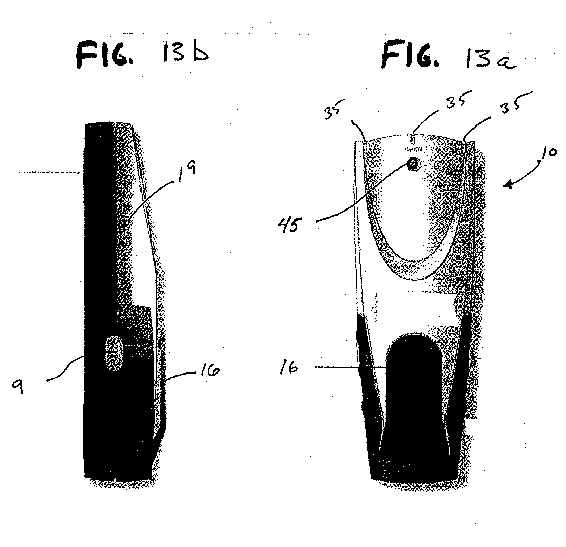

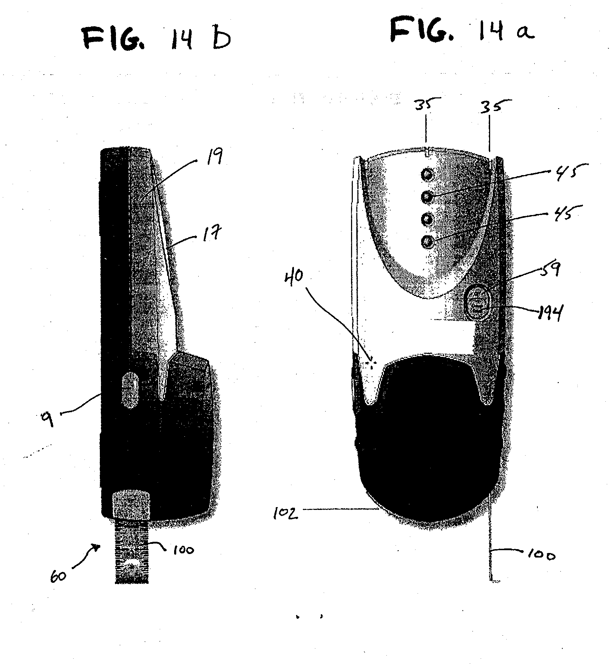

Various configurations of the housing 15 and the location marker 35 are possible as shown in Figures 7a to 7c. Alternatively, as shown in FIGs. 13a, 14a, 15a, and 16a, the location marker may in the form of a slot or groove. In addition, more than one location marker 35 may be provided at predetermined locations such as at the center of the stud and at the typical distance from the stud center to the stud edge.

The tradesman may also need to easily and quickly identify or mark a location of the wall surface 50 at predetermined distances from a second surface 70. Referring again to Figures 1 and 2, the object sensor 10 of the present invention may be designed to indicate the distance between it and second surface 70. Accordingly, it is desirable to provide a distance detector 60 to enable a tradesman to determine the distance between the object sensor 10 and a second surface 70. The distance detector 60 may be located within the housing 15 or on any portion the housing 15 including its front surface 17, back surface 21, or peripheral surface 19.

In one form, as shown in FIG. 1 and FIG. 15a, the distance detector 60 includes an activation button 59 provided on the housing 15 to cause a transmitter 61 located on the peripheral surface 19 to transmit a beam 62 towards the second surface 70. The reflected beam 63 is received by receiver 65 also located on the peripheral surface 19. The beam may be an ultrasonic beam, a laser beam, or any other type of beam.

The computing system 14 then determines the distance from the object sensor 10 to the second surface 70 based on the beam. The microcontroller 11, which may contain the computing system 14 or receive a signal from it, can then provide an in indication of the determined distance. For example the indication may be a visual display of the distance on display 24. The display 24 may use liquid crystals or light-emitting diodes. Press button 22 allows the user to select the units indicated on the display 24 from, for example, feet, inches, meters, or centimeters.

In another embodiment of the object sensor 10 of the present invention, the object sensor 10 may include a tracking mechanism 71 that can be connected to the computing system 14, which in turn may be connected to or formed as part of the microcontroller 11. The tracking mechanism 71 provides a signal to the computing system 14 so that the computing system 14 can determine the distance the object sensor 10 is moved from a start point.

For instance, the tradesman may want to drill two holes into a stud twenty inches apart in the vertical direction. The object sensor 10 is first positioned in the desired start position using, for example, the transmitter/receiver described above and the level 20. A start button 69 is pressed to "zero" the object sensor 10 and create the start point.

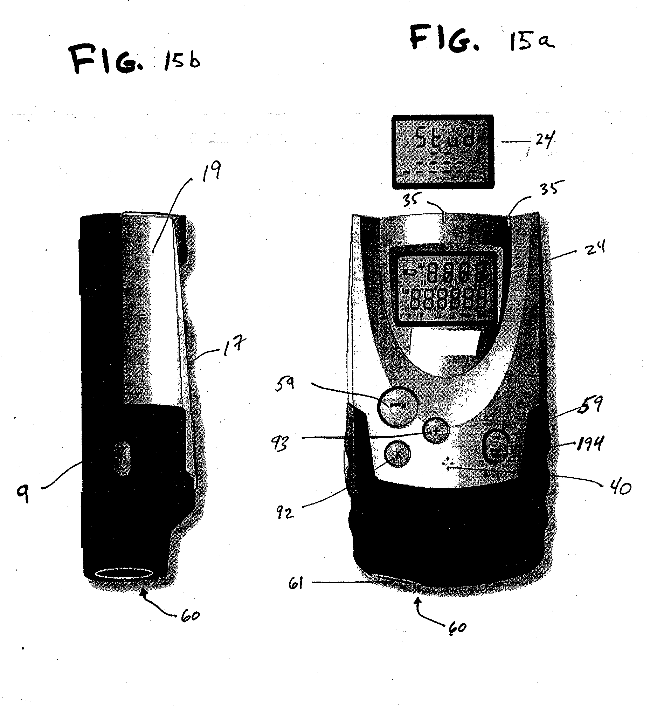

Referring now to Figures 8a, 8b, and 8c, a tracking mechanism 71 is shown that may comprise a commercially known and available track ball 72, at least one tracking wheel 75, or an optical tracking device 79 on the back surface 21 of the object sensor 10. If two tracking wheels are used, it is desirable that they are retractable to allow the object sensor 10 to be moved along the wall surface 50. The tracking mechanism 71 is used to measure the distance the object sensor 10 is moved and a signal is provided to the computing system 14 which can then determine the distance. The computing system 14 can either provide an indication of the determined distance or provide a signal to the microcontroller 11, which can then provide an indication of the determined distance. The indication can be a visual indication displayed on a display 24. The display 24 may indicate the distance moved in a single axis, multiple axes, or using polar coordinates.

The level 20 is useful to advise the tradesman of the inclination of the object sensor 10 and to ensure that the object sensor 10 moves in the proper coordinate system.

Using the tracking mechanism 71, the sensing system 12, the computing system 14, and the microcontroller 11, the object sensor 10 can locate the edges of a stud 55 and determine the location of the center of a stud. For example, the start button 69 can be depressed in a manner to cause the sensing system 12 to go to a "centering" mode. In this mode, the object sensor 10 "zeros" itself when it goes over a first edge of a stud 55. As the tradesman keeps moving the object sensor 10 over the stud 55, the sensing system 12 detects a second edge of the stud. The microcontroller 11 then determines the center of the stud 55 based on the position of the two edges. When the tradesman moves the object sensor 10 back towards the first edge, the object sensor 10 indicates using lights and/or audible sounds when the object sensor 10 is over the center of the stud 55.

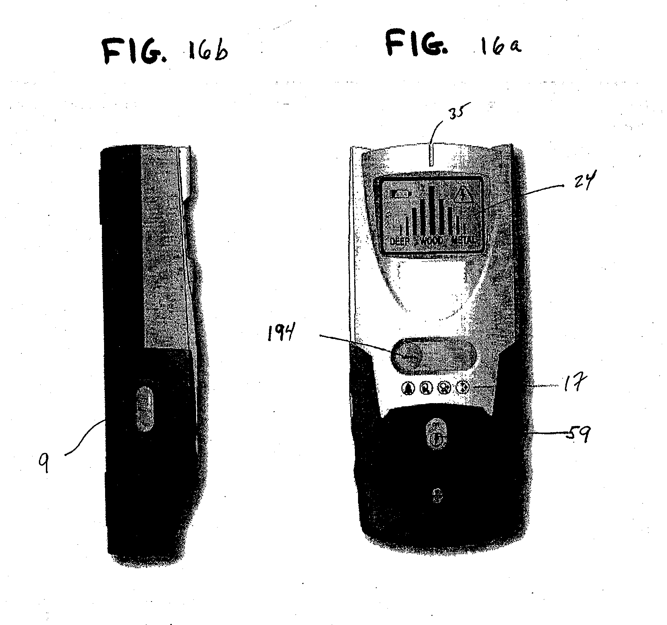

In another embodiment shown in FIG. 9, the housing 15 of the object sensor 10 may contain a distance detector 60 in the form of a retractable tape measure 100 that can be pulled from the housing 15. The tape measure 100 is stored or hidden inside the housing 15 until it is pulled out. The tape measure 100 can be flat (as shown) or cylindrical. The tape measure 100 may be manually pulled out and pushed back into the housing 15. Desirably, the housing 15 contains retractable means 120 of a known and commercially available type to retract the tape measure 100 when the tradesman is finished using the tape measure. For example, the retractable means 120 can include a spring or other resilient structure to bias the tape measure into a coiled and retracted position.

In addition, as best seen in FIG. 14a and 14b, when a retractable tape measure 100 is provided, it is desirable to provide a tape measure lock 102 to lock the retractable tape measure 100 in a desired location. Such locks are known and are generally a slidable lock that contacts one side of the tape measure and forces an opposite side against a housing to maintain the tape measure in a desired location.

The housing 15 can be designed so that the tape measure 100 can also be deployed from other surfaces, such as the front surface 17 or the peripheral surface 19, and viewed from other positions. The housing 15 may further include a clip 16 to attach the object sensor 10 to, for example, a utility belt. For example, as best seen in FIGs. 13a and 13b, the clip 16 may be provided on the front surface 17 of the object sensor 10.

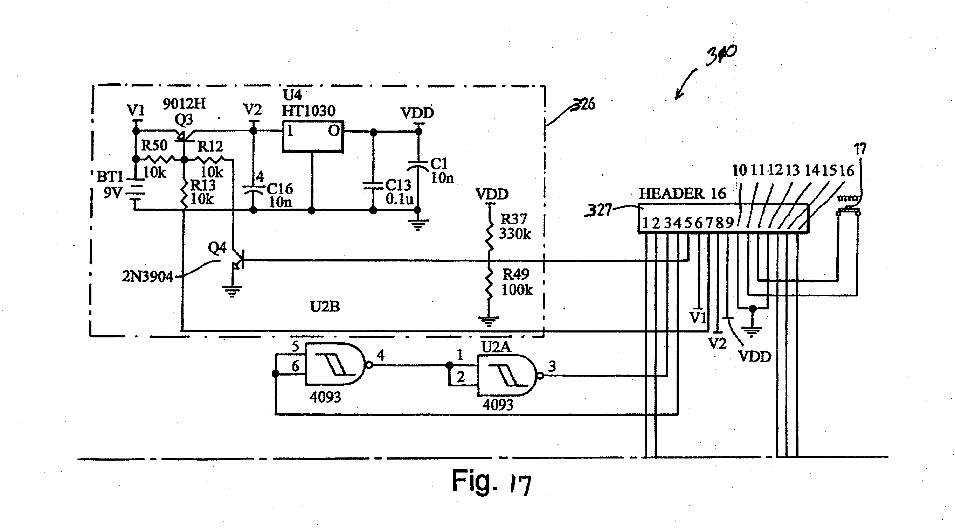

The tradesman may also need to mark multiple locations at a predetermined distance from a start point in a known axis such as the vertical axis. The tradesman must first find the start point using, for example, any of the methods already described and check proper inclination of the object sensor 10 using level 20. Referring now to FIG. 10a, a projecting activation button 90 activates projector 80 which projects a scale 81 onto the wall surface 50. Alternatively, the object sensor 10 may simply project at least one beam 82, 84, 86, 88 at predetermined distance a, b, c, d from the object sensor 10 as shown in FIG. 10b. The projector 80 may be any of a known and commercially available type. This feature will be useful, for example, if the tradesman must put a series of screws into a stud every four inches. The number of beams and the projected distances may be factory set or be a user option.

In yet another embodiment, the distance detector 60 of the object sensor 10 may include a laser to provide a laser beam from a surface of the object sensor 10 such as the peripheral surface 19. The laser beam may be activated to identify a spot on the wall or other surface and then the object sensor is moved to a second spot on the wall or other surface at which time the laser beam may again be activated and the distance between the two spots can be measured and displayed.

While the object sensor 10 is shown as a hand-held device, the features therein can be incorporated into larger and heavier devices having more powerful sensors that can be movable by wheels and used to locate objects such as rebar located under many inches of concrete.

Referring again to FIG. 2 and to FIG. 15a, the object sensor 10 may comprise a plurality of buttons 91, 92, and 93 that, in conjunction with the microcontroller 11, allow the tradesman to perform mathematical calculations on, for example, numbers shown on the display 24. For example, the buttons 91, 92, 93 may allow the tradesman to compute sequential lengths or distances, to calculate area or volume, to convert distances from the metric system to the US equivalents and vice versa.

In addition, the microcontroller 11 may be preprogrammed with formulas so that certain estimates may be calculated based on distance measurements. For example, the microcontroller 11 may be preprogrammed to contain formulas useful to estimate the amount of paint and/or wallpaper needed to cover a particular surface, the number of boards of drywall, tiles, or studs needed for a particular surface.

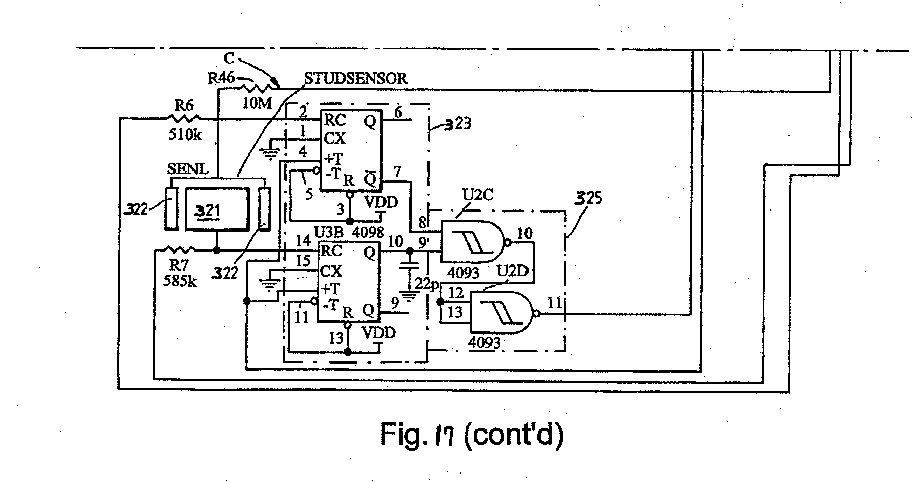

In yet another embodiment, the object sensor 10 of the present invention shown in Figures 11a, 11b, and 11c, is releasably attachable to the rear housing 205 of a portable tool 200 having a tool axis 220. The portable tool may be, for example, a corded or battery-powered drill, power screw driver, circular saw, or reciprocating saw of a known construction and design

The object sensor 10 desirably has a pair of recesses 111 and cavities 113 sized to receive a pair of projections 210 having upward extending portions 212 extending from the rear housing 205 of the portable tool 200. To secure the object sensor 10 to the portable tool 200, the recess 111 of the stud sensor 10 is aligned with the projections 210 and then pushed towards the portable tool and pushed downwards to lock the upward extending portions 212 into the cavity 113 in the recess. To release the object sensor 10, the steps are reversed.

Alternatively, one of the upward extending portions 212 could extend downward and one recess 111 and cavity 113 could be designed such that the object sensor 10 locks onto the portable tool 200 by rotating the object sensor around the tool axis 220 rather than pushing the object sensor down.

Although the portable tool 200 is shown with two projections 210 and the object sensor 10 is shown with two recesses 111, fewer or more projections and recesses could be used.

In another embodiment, as best seen in FIGs. 12a-12d, the object sensor 10 may be slidably received in a storage case 300. The object sensor 10 may be completely removable from the case 300 or, as shown in the figures, partially removable. FIG. 12a shows the object sensor partially removed from the storage case 300 and ready for use. FIG 12b shows the object sensor 10 in a storage position with a majority of the object sensor 10 contained within the storage case 300. FIG. 12c shows the object sensor in a use position.

The object sensor of this embodiment may also have a level 20 provided on a surface of the storage case. In addition, the storage case 300 may have a surface such as a bottom surface 302 to allow the storage case 300 to be removably attached to a portable tool 200. In this regard, FIG. 12d shows a partial cross section of a portion of the bottom surface 302 of the storage case and a partial cross section of a portion of a portable tool 200 with a pair of projections 210 in the form of a tongue. The projections can matingly receive a pair of recesses 111 in the form of a groove provided on the bottom surface 302 of the storage case. Accordingly, to secure the object sensor 10 onto the portable tool 200, the storage case 300 having recesses 111 are aligned with the projections 210 on the portable tool and then slidingly mated.

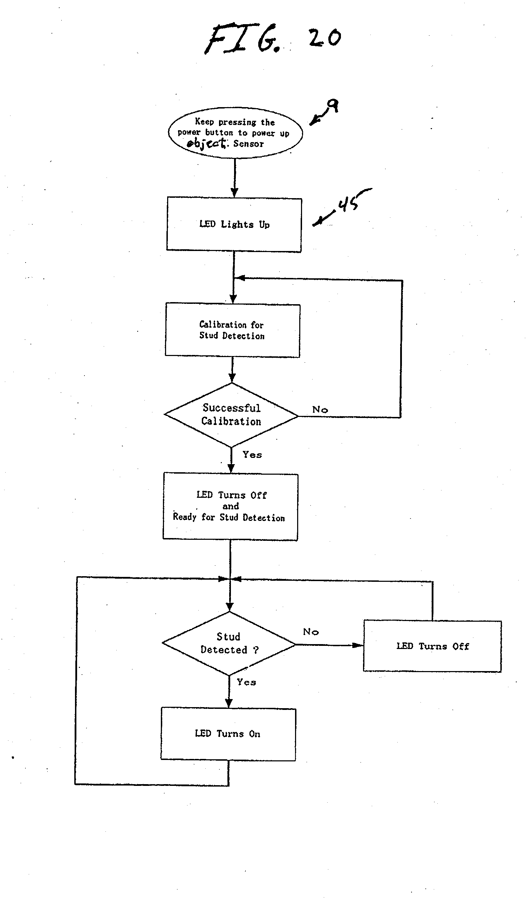

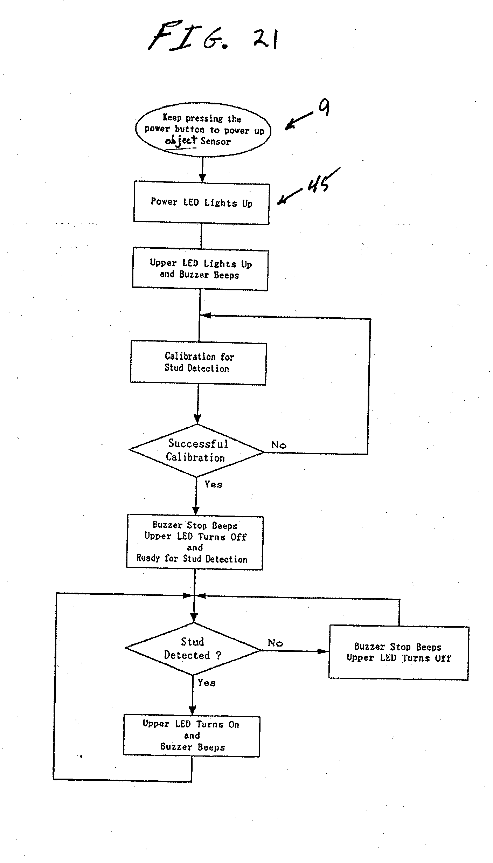

Turning now to FIG. 20, one embodiment of the object sensor 10 aspect of the present invention is shown and in particular, the operation of the stud sensing circuit 310. In this embodiment, the power switch 9 is pressed to power up the object sensor 10 and at least one indicator 45 illuminates, desirably as a green light. Automatic calibration of the stud sensing circuit 310 is completed and, if successful, the illuminated at least one indicator 45 turns off and the object sensor is ready for stud detection. If, during operation, the object sensor detects a stud or other wooden object, the same or different at least one indicator 45 illuminates. An alternative arrangement is shown in FIG. 21 where a visual indication is provided by the at least one indicator lights 45 and an audible indication is provided through speaker 40.

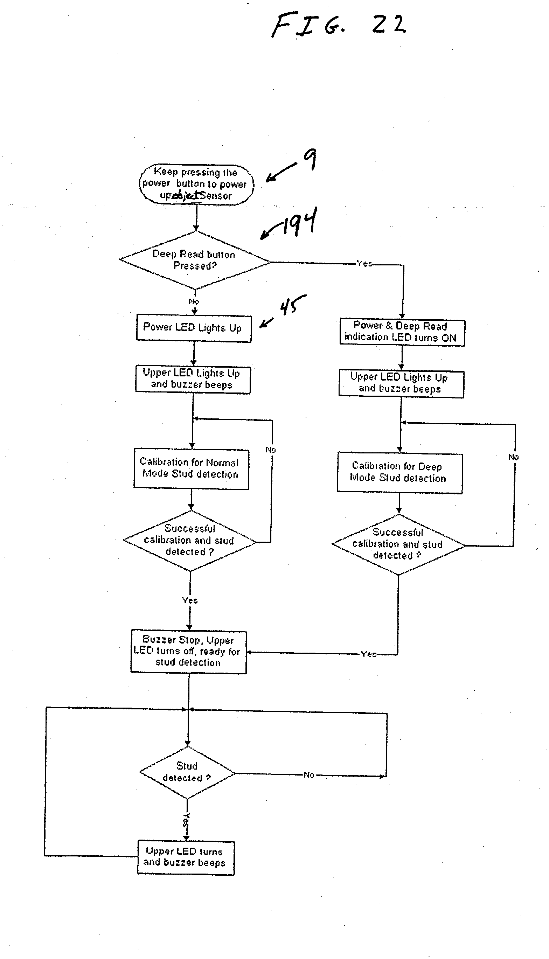

FIG. 22 shows a flow sheet for another embodiment of the object sensor 10 aspect of the present invention and in particular, the operation of the stud sensing circuit 310. In this embodiment, the power switch 9 is pressed to power up the object sensor 10 and if the mode button 194 is depressed to switch the mode of the stud sensing circuit 310, two of the at least one indicator lights 45 illuminate and, optionally, an audible indication is provided through speaker 40. Thereafter, the stud sensor circuit 310 is calibrated for a deep read stud detection, as described above. After the calibration is complete and successful, one of the at least indicator lights 45 turns off and, if an audible indication is provided, it too is turn off so that the object sensor 10 is ready for stud detection. If, during operation, the object sensor 10 detects a stud or other wooden object, the same or different at least one indicator 45 illuminates and, optionally, an audible indication is provided through speaker 40.

On the other hand, if the mode button 194 is not depressed, one of the least one indicator lights 45 illuminates and, optionally, an audible indication is provided through speaker 40. Thereafter, the stud sensor circuit 310 is calibrated for normal mode stud detection, as described above. After the calibration is complete and successful, one of the at least indicator lights 45 turns off and, if an audible indication is provided, it too is turn off so that the object sensor 10 is ready for stud detection. If, during operation, the object sensor 10 detects a stud or other wooden object, the same or different at least one indicator 45 illuminates and, optionally, an audible indication is provided through speaker 40.

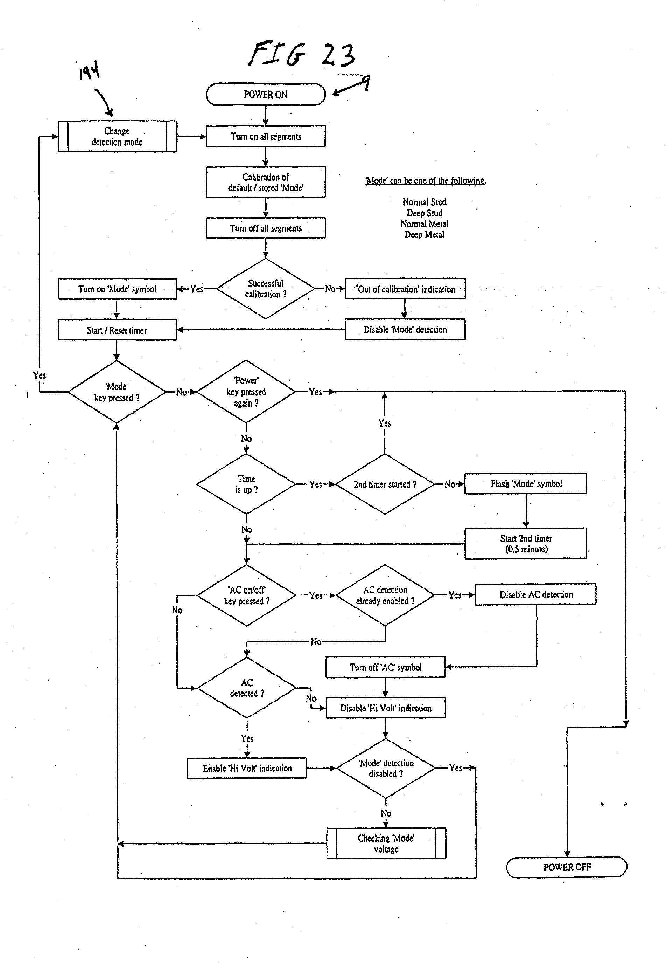

FIG. 23 shows a flow sheet of another embodiment of the object sensor 10 aspect of the present invention. In particular, the flow chart in FIG. 23 depicts the detection of a live electrical wire using the metal object and live wire locating circuit 312. It can be seen that several modes can be selected such as a normal stud detection mode, a deep read stud detection mode, a normal metal detection mode, and a deep metal detection mode.

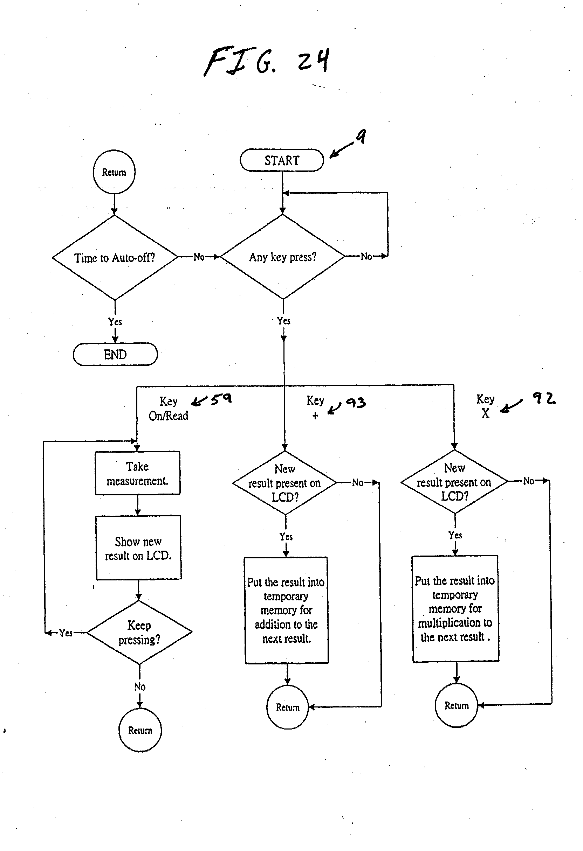

FIG. 24 shows a flow sheet of another embodiment of the object sensor 10 aspect of the present invention and, in particular a sonic distance detection using the distance detector 60. In this embodiment, and referring to, for example, FIGs. 15a and 15b, the power switch 9 is depressed to power up the object sensor 10. The transmitter activation button 59 may then be depressed to measure a distance from the object sensor 10 to for example a wall. The distance will be shown in display 24. Thereafter, one of the plurality of buttons 91, 92, 93 may be depressed to perform an arithmetic operation with the measured distance.

[00100] It will be understood by one skilled in the art that any or all of the methods of operation shown and described in FIGs. 20 through 24 may be incorporated into the object sensor 10 of the present invention.

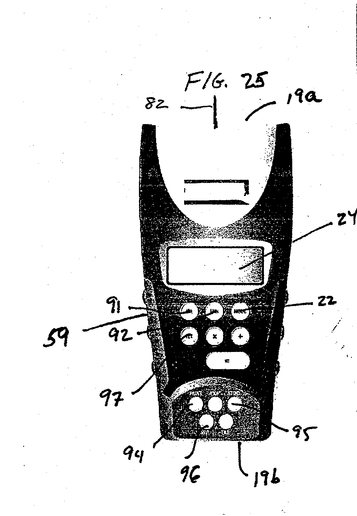

[00101] Turning now to FIG. 25, another aspect of the present invention is shown. In this aspect, a distance detector 60 is provided separate from an object sensor 10 that includes a stud, metal, or live wire detector. In this regard, the distance detector 60 may include the same features described above with respect to the object sensor, except that it will not contain a sensing system 12 that includes one or more of a stud detection circuit 310 or a metal and live wire detection circuit 312. The distance detector, however, may contain a microcontroller 11, a computing system 12 as well as indicator lights 45, a speaker 40 as well as other features described above with respect to the object sensor 10. Accordingly, with reference to FIG. 25, like reference numerals will refer to like features previously described with the foregoing drawings.

In general, the distance detector 60 depicted in FIG. 25 is provided with a transmitter 61 that transmits a sonic, desirably an ultrasonic beam or a visible, particularly a laser beam, towards the second surface 70. The reflected beam is received by receiver also located on the peripheral surface 19.

The computing system 14 then determines the distance from the distance sensor 60 to the second surface 70 based on the beam. The microcontroller 11, which may contain the computing system 14 or receive a signal from it, can then provide an in indication of the determined distance. For example the indication may be a visual display of the distance on display 24. The display 24 may use liquid crystals or light-emitting diodes. Press button 22 allows the user to select the units indicated on the display 24 from, for example, feet, inches, meters, or centimeters.

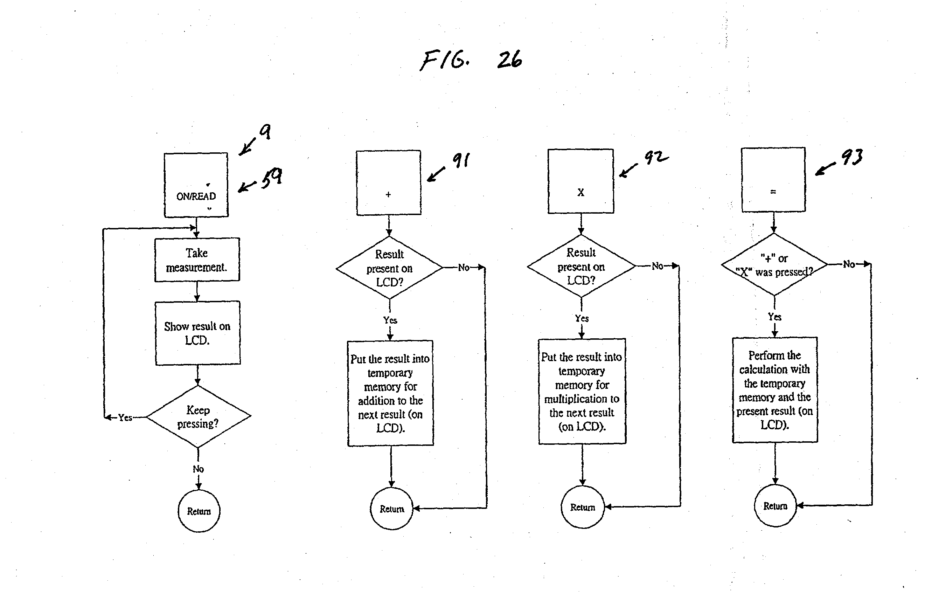

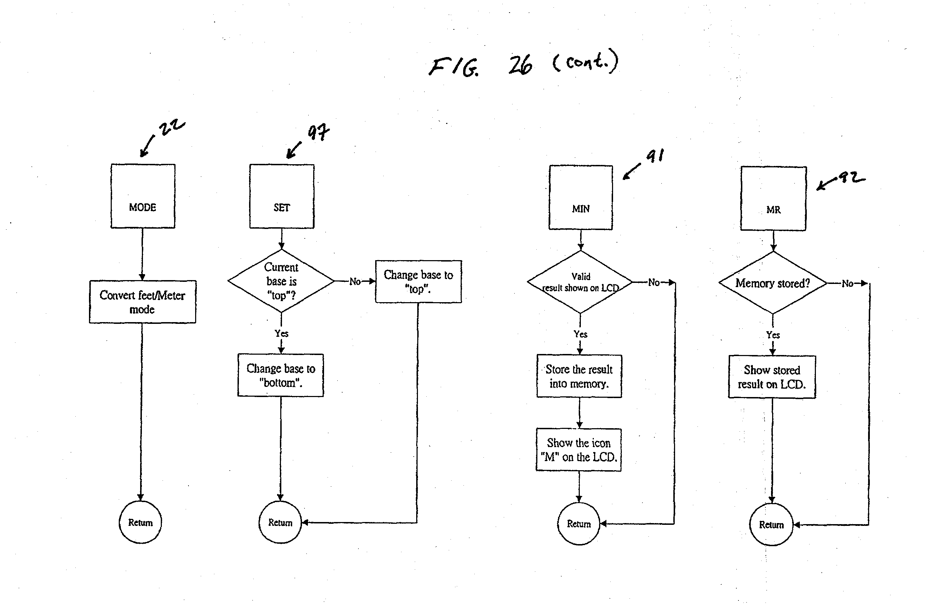

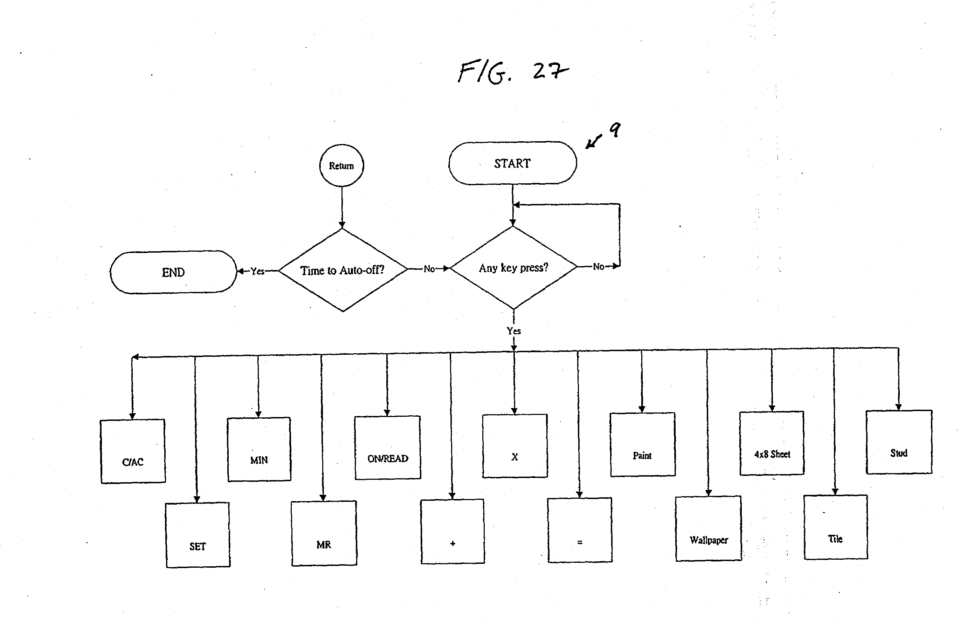

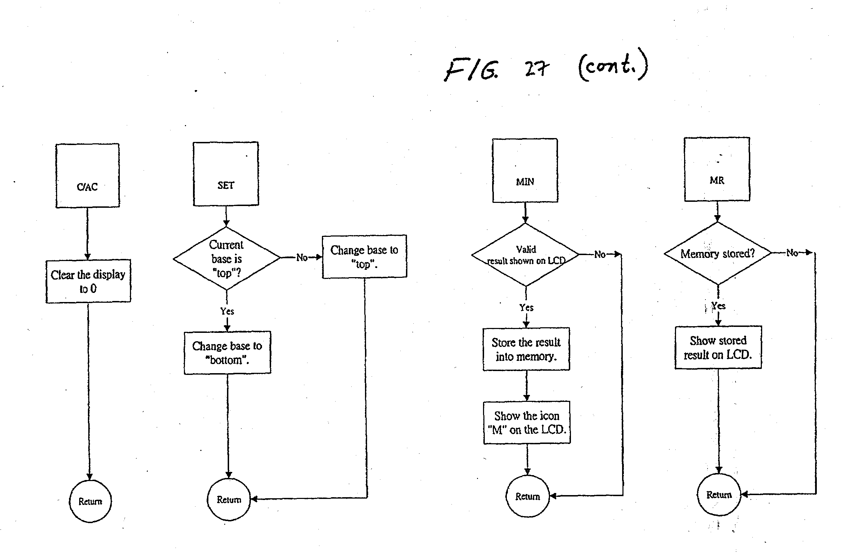

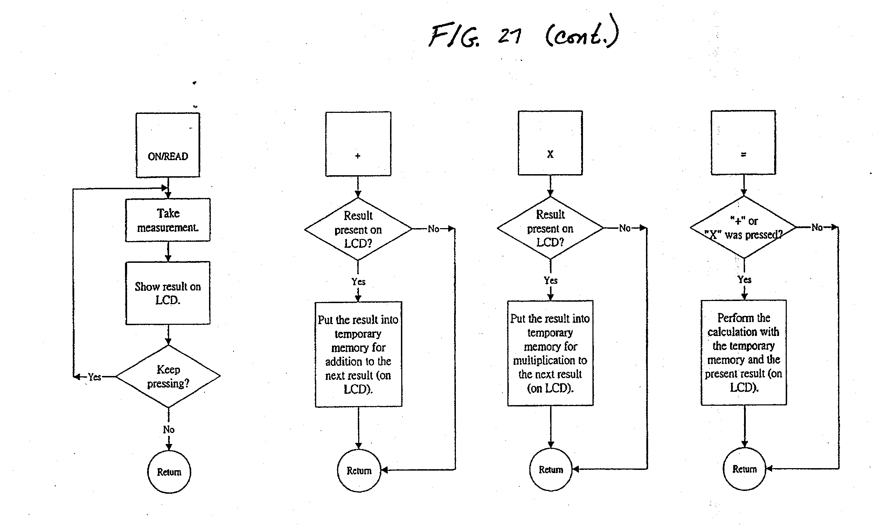

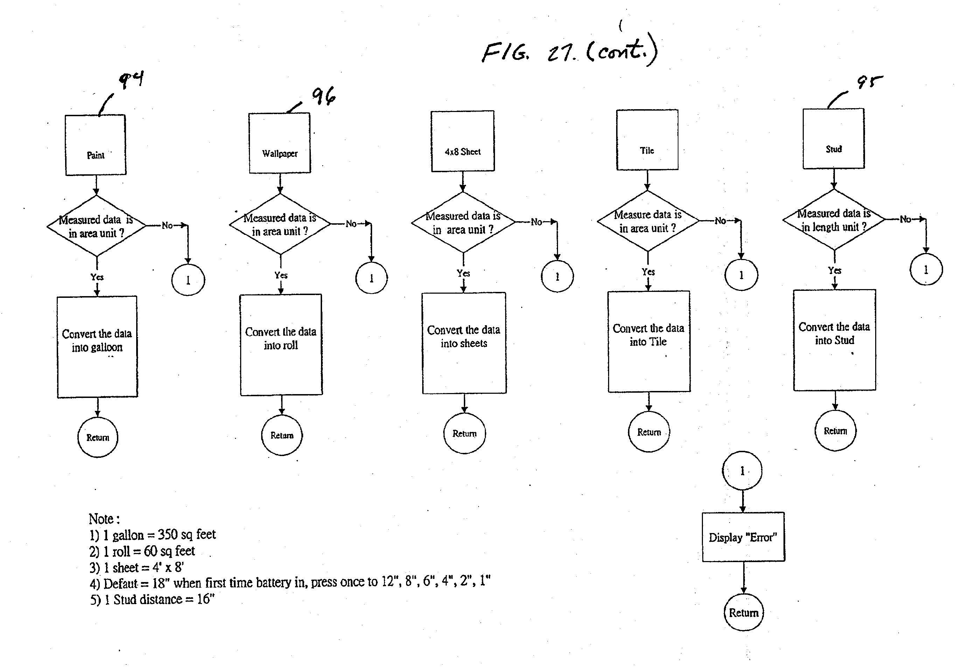

In addition, one of a plurality of buttons 91, 92 may be provided to interact with the computing system 14 and/or microcontroller 11 such that engagement of one of the plurality of buttons 91, 92 will conduct arithmetical operations and/or temporarily store into memory a detected distance and/or recall from memory the detected distance, and/or perform calculations with the detected distance. For example, as shown in FIGs. 26 and 27, stored distances may be added to or multiplied detected distances with the result displayed at display 24.

In addition, the distance sensor 60 may be provided with other plurality of buttons 94, 95, 96 that interact with the microcontroller 11 so that certain estimates may be calculated based on distance measurements. For example the microcontroller 11 may be preprogrammed to contain formulas useful to estimate the amount of paint and/or wallpaper needed to cover a particular surface, the number of boards of drywall, tiles, or studs needed for a particular surface. FIG. 27 shows several of these operations.

Desirably, the distance sensor 60 is provided with a measurement set pushbutton 97 that will in conjunction with the microcontroller allow the detected distance to be measured from either of a front end 19a or a rear end 19b of the distance detector 60.

The distance sensors 60 may also be provided with a laser pointing feature to project a beam 82 that is used when the distance sensor uses an ultrasonic beam to provide a more accurate distance measurement. The beam 82 may project any suitable distance such as, for example, the maximum distance for which the distance sensor is designed. Suitable distances are from about 0.6 m to about 15 m.

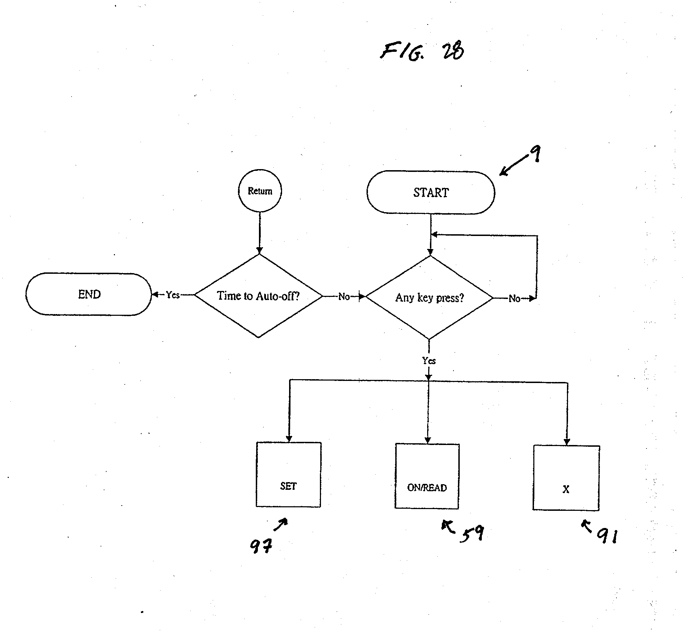

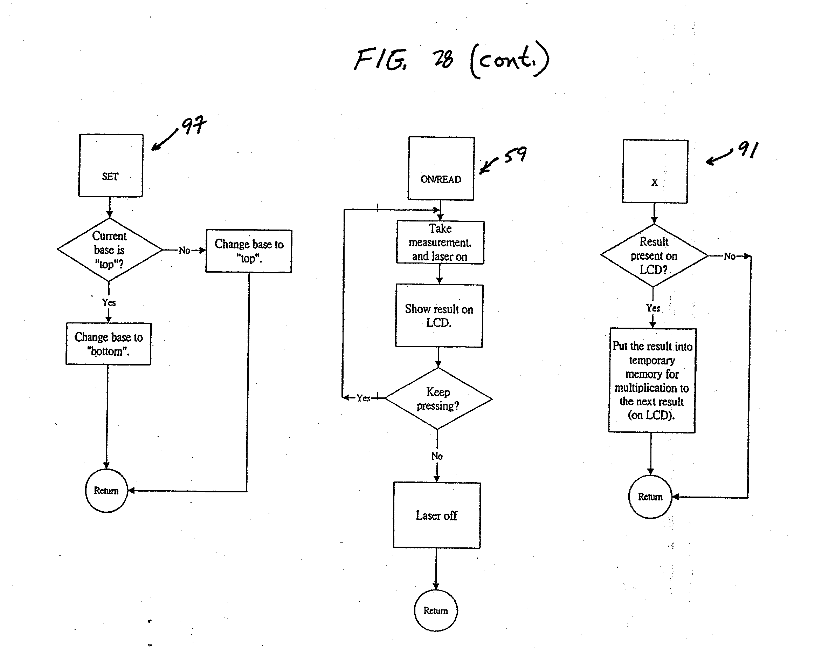

Referring to FIG. 28, a flow chart for a distance sensor 60 using a laser beam is depicted. In this embodiment, the power switch 9 activates the sensor 60 and if the power switch is depressed again it acts as the transmitter activation button 59 to activate the laser beam which is transmitted to the second surface 70, reflected back to the sensor 60, measured and displayed at display 24. An alternative flow sheet showing features that could be provided with the device of FIG. 25 is shown at FIG> 29.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. An object sensor for sensing a location of objects hidden behind a first surface comprising:
a. a housing having a front surface having a display and a rear surface;
b. a sensing system contained within the housing to sense at least one object located behind the first surface; and
c. a distance detector to detect the distance between the object sensor and a second surface.

2. The object sensor of claim 1 wherein the distance detector comprises:
a. a transmitter to transmit a beam of energy towards the second surface;
b. a receiver to receive the beam of energy reflected back from the second surface; and
c. a computing system to determine the distance from the object sensor to the second surface based on the transmitted and reflected beam.

3. The object sensor of claim 1 further comprising a display to provide an indication of the determined distance.

4. The object sensor of claim 1 wherein the housing further comprises a level.

5. The object sensor of claim 1 wherein the housing further comprises a location marker.

6. The object sensor of claim 1 wherein the distance detector comprises a measuring tape contained in the housing.

7. The object sensor of claim 6 wherein the housing further comprises a level.

8. The object sensor of claim 1 further comprising
a. a tracking mechanism;
b. a computing system such that the distance the object sensor is moved from a start point on the first surface is determined; and,
c. a display to provide an indication of the determined distance.

9. The object sensor of claim 8 wherein the tracking mechanism comprises an optical tracking device.

10. The object sensor of claim 8 wherein the tracking mechanism is a rolling device selected from the group consisting of a track ball and a track wheel.

11. The object sensor of claim 8 wherein the housing further comprises a level.

12. An object sensor for sensing objects hidden behind a wall comprising:
a. a housing having a front surface including a display and a rear surface;
b. a sensing system to sense the hidden objects behind the wall;
c. a tracking mechanism;
d. a computing system such that the distance the object sensor is moved from a start position can be determined; and
e. a display to provide an indication of the determined distance.

13. The object sensor of claim 12 wherein the tracking mechanism is a rolling device selected from the group consisting of a track ball and a track wheel.

14. The object sensor of claim 12 wherein the tracking mechanism comprises an optical tracking system.

15. The object sensor of claim 12 wherein the object sensor further comprises a level.

16. The object sensor of claim 12 wherein the housing comprises a location marker.

17. An object sensor for sensing a location of objects hidden behind a first surface, comprising:
a. a housing having a front surface with a display, a rear surface, and a peripheral edge;
b. a sensing system contained within the housing to sense at least one object located behind the first surface; and,
c. a location marker comprising an aperture located in a central portion of the housing and extending from the front surface through the rear surface, the location marker disposed within the peripheral edge housing.

18. An object sensor for sensing objects hidden behind a surface, the object sensor comprising;
a. a housing that comprises a projector to project at least one visible beam onto the surface at a predetermined distance from the housing; and,
b. a sensing system for sensing objects hidden behind the surface.

19. The object sensor of claim 18 wherein the housing has a location marker.

20. The object sensor of claim 18 wherein the object sensor further comprises a level.

21. An object sensor for sensing objects hidden behind a first generally planar surface comprising:
a. a housing having a front surface with a display, a rear surface, and a measuring tape; and
b. a sensing system contained within the housing to sense hidden objects located behind the first planar surface.

22. The object sensor of claim 21 wherein the measuring tape is retractable.

23. An object sensor for releasable attachment to a portable tool having a housing with at least one protrusion, the object sensor comprising:
a. a housing having a front surface and a rear surface, the rear surface having at least one recess sized to receive the protrusion for releasably attaching the object sensor to the portable tool, and a location marker; and
b. a sensing circuit contained within the housing for sensing objects hidden behind a surface.

24. The object sensor of claim 23 wherein the portable tool has two projections, each projection having an extending portion, and the rear surface of the object sensor has two recesses, each recess having a cavity to receive the extending portion of each projection.

25. The object sensor of claim 24 wherein the cavities in the recesses are pointing in the same direction.

26. The object sensor of claim 24 wherein the cavities in the recesses are pointing in opposite direction.

27. An object sensor comprising:
a. a housing having a surface, a back surface, and a peripheral surface joining the front surface and the back surface;
b. a retractable tape measure that selectively extends and retracts from the peripheral surface; and,
c. a microcontroller that is cooperatively associated with the retractable tape measure and that determines the distance the tape measure extends from the housing.

28. The distance detector of claim 27 further comprising a lock to selectively lock the tape measure in a desired location.

29. The distance detector of claim 27 wherein the housing further has a display to show the determined distance.

30. The distance detector of claim 27 further comprising a first plurality of pushbuttons cooperatively associated with the computing system such that depressing one of the first plurality of pushbuttons performs arithmetical operations.

31. The distance detector of claim 30 wherein depressing one of the first plurality of pushbuttons sums sequential determined distances.

32. The distance detector of claim 27 further comprising a pushbutton that upon depressing will cooperatively interact with the computing system to selectively change the determined distance from a front end of the distance detector to a rear end of the distance detector.

33. A distance detector comprising:
a. a housing having a front surface, a back surface, and a peripheral surface joining the front surface and the back surface;
b. a transmitter that transmits from at least a portion of the peripheral surface a beam selected from one of an ultrasonic beam or a laser beam to a second surface;
c. a receiver to receive a reflected beam reflected from the second surface; and,
d. a computing system to determine the distance from the peripheral surface of the distance detector to the second surface.

34. The distance detector of claim 33 further comprising display to show the determined distance.

35. The distance detector of claim 33 further comprising a first plurality of pushbuttons cooperatively associated with the computing system such that depressing one of the first plurality of pushbuttons performs arithmetical operations.

36. The distance detector of claim 35 wherein depressing one of the first plurality of pushbuttons sums sequential determined distances.

37. The distance detector of claim 35 wherein depressing one of the plurality of pushbuttons stores the determined distance in a memory.

38. The distance detector of claim 33 further comprising second plurality of pushbuttons cooperatively associated with a microcontroller such that depressing one of the second plurality of pushbuttons will selectively activate at least one of a change of mode, an operation, or a arithmetical calculation.

39. The distance detector of claim 38 wherein depressing one of the second plurality of pushbuttons calculates one of an amount of paint, an amount of wallpaper, a number of four foot by eight foot boards, a number of tiles, or a number of studs needed based on two sequential determined distances.

40. The distance detector of claim 33 further comprising a pushbutton that upon depressing will cooperatively interact with the computing system to selectively change the determined distance from a front end of the distance detector to a rear end of the distance detector.

41. The distance detector of claim 33 wherein the transmitted beam is an ultrasonic beam and the detector further comprises a laser to generate a laser beam.
